# EUROPEAN PATENT APPLICATION

(11) **EP 3 477 810 A1**
(43) Date of publication of application: **01.05.2019**
(21) Application number: 17199270.4
(22) Date of filing: 30.10.2017
(51) Int. Cl.: H02J 7/00, H02J 7/04

(54) **METHOD OF OPERATING AN ELECTRONIC DEVICE, ELECTRONIC DEVICE AND COMPUTER PROGRAM**

(71) Applicant: Vestel Elektronik Sanayi ve Ticaret A.S., 45030 Manisa (TR)
(72) Inventor: KURALAY, Fatih, 45030 Manisa (TR); DEMIR, Fatih, 45030 Manisa (TR)
(74) Representative: Martinez, Olivier Gildas

(57) **Abstract**

An electronic device determines (204) whether it is connected to a charger meeting at least one charging requirement of the electronic device. Then, the electronic device determines (206, 216) whether to enable a charging component of the electronic device based thereon.

## Description

### Technical Field

The present disclosure relates to a method of operating an electronic device, an electronic device and a computer program for an electronic device. The present disclosure also relates to a method of operating a charger, a charger and a computer program for a charger.

### Background

Most mobile phones and other electronic devices are designed to be connected to wall chargers via a Universal Serial Bus (USB) cable to charge their batteries. As mobiles phones are not necessarily connected to chargers meeting charging requirements specified by the manufacturer of the mobile phone, mobile phones are equipped with charging integrated circuits (ICs) to regulate the input voltage and input current of their batteries.

### Summary

According to a first aspect disclosed herein, there is provided a method of operating an electronic device, the method comprising:
determining whether the electronic device is connected to a charger meeting at least one charging requirement of the electronic device; and
determining whether to enable a charging component of the electronic device based on whether the electronic device is connected to a charger meeting at least one charging requirement of the electronic device.

The at least one charging requirement of the electronic device may include that an output voltage of the charger is lower than or equal to a predetermined maximum voltage.

The at least one charging requirement of the electronic device includes that an output current provided by the charger is lower than or equal to a predetermined maximum current.

The method may comprise:
enabling the charging component of the electronic device when the electronic device is connected to a charger not meeting the at least one charging requirement of the electronic device; and
disabling the charging component of the electronic device when the electronic device is connected to a charger meeting the at least one charging requirement of the electronic device.

Determining whether the electronic device is connected to a charger meeting at least one charging requirement of the electronic device may comprise:
transmitting a message to the charger;
determining whether a response is received to the message; and
determining whether the electronic device is connected to a charger meeting at least one charging requirement of the electronic device based on whether a response is received to the message.

The method may comprise:
determining that the electronic device is connected to a charger meeting at least one charging requirement of the electronic device when a response is received to the message; and
determining that the electronic device is not connected to a charger meeting at least one charging requirement of the electronic device when no response is received to the message.

The method may comprise:
transmitting an input voltage of the electronic device to the charger.

The method may comprise:
transmitting battery information of the electronic device to the charger.

The battery information may include temperature and/or a percentage of charge.

The electronic device may be connected to the charger by a Universal Serial Bus (USB) cable.

The transmitting and/or the receiving may be performed via data lines of a Universal Serial Bus (USB) cable.

According to a second aspect disclosed herein, there is provided an electronic device comprising at least one processor and at least one memory including a computer program code, the at least one memory and the computer program code configured to, with the at least one processor, cause the electronic device at least to perform a method as discussed above.

According to a third aspect disclosed herein, there is provided a computer program for an electronic device, comprising software code portions for performing a method as described above when said computer program is run on the electronic device.

According to a fourth aspect disclosed herein, there is provided a method of operating a charger, the method comprising:
determining a characteristic of a cable connecting the charger to an electronic device; and
adjusting at least one output of the charger based on the determined characteristic.

The characteristic of a cable may include a voltage drop across the cable during charging.

Determining a characteristic of a cable connecting the charger to an electronic device may comprise:
receiving an input voltage of the electronic device from the electronic device; and
determining a voltage drop across the cable based on an output voltage of the charger and the input voltage of the electronic device .

Adjusting at least one output of the charger based on the determined characteristic may comprise:
increasing the output voltage of the charger by the determined cable voltage drop.

The method may comprise:
receiving battery information of the electronic device from the electronic device; and
adjusting the at least one output of the charger based on the battery information.

Adjusting the at least one output of the charger based on the battery information may comprise determining a plurality of charging stages.

The plurality of charging stages may include a trickle charge stage, a constant current stage and/or a constant voltage stage.

The charger may be connected to the electronic device by a Universal Serial Bus (USB) cable.

The receiving may be performed via data lines of a Universal Serial Bus (USB) cable.

According to a fifth aspect disclosed herein, there is provided a charger comprising at least one processor and at least one memory including a computer program code, the at least one memory and the computer program code configured to, with the at least one processor, cause the electronic device at least to perform a method as discussed above.

According to a sixth aspect disclosed herein, there is provided a computer program for a charger, comprising software code portions for performing a method as described above when said computer program is run on the charger.

### Brief Description of the Drawings

To assist understanding of the present disclosure and to show how embodiments may be put into effect, reference is made by way of example to the accompanying drawings in which:
Figure 1 shows schematically an example of a mobile phone and a wall charger according to an embodiment disclosed herein;
Figure 2 shows schematically a flow diagram of an example of a method of operating the mobile phone of Figure 1; and
Figure 3 shows schematically a flow diagram of an example of a method of operating the wall charger of Figure 1.

### Detailed Description

Various technologies have been proposed to charge a mobile phone quicker. For example, the Quick Charge™ technology by Qualcomm Technologies, Inc. achieves this purpose by using a charging power greater than the charging power of a traditional USB technology. Quick Charge™ (version 4.0) is said to charge at either 5V (4.7A to 5.6A) or 9V (at 3A) which equates to a dynamic charging power of up to 28W. By contrast the traditional USB technology (version 1.0) charges at 5V (1.5A) which equates to a static charging power of 7.5W

To be implemented, both the wall charger and the mobile phone must be Quick Charge™ compatible. However, even in such a case, the mobile phone is equipped with a charging IC to regulate the input voltage and input current of the mobile phone. An issue with the charging IC is that it generates and dissipates a large amount of heat in use, which in the long term may alter the functioning of the mobile phone and cause irreversible damage, at least to the battery but possibly to other components too.

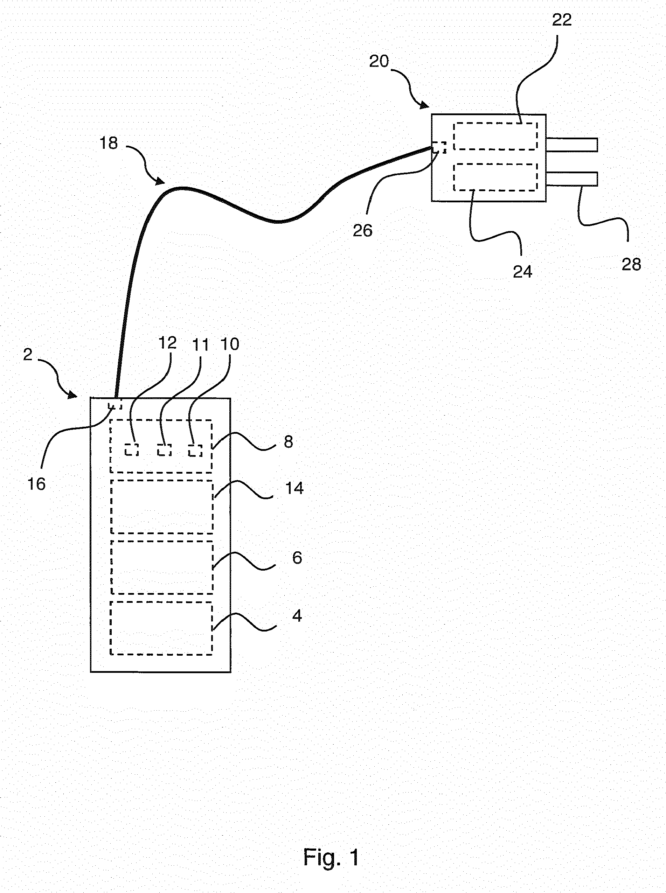

Figure 1 illustrates a mobile phone 2 as an example of an electronic device according to an aspect of the present disclosure.

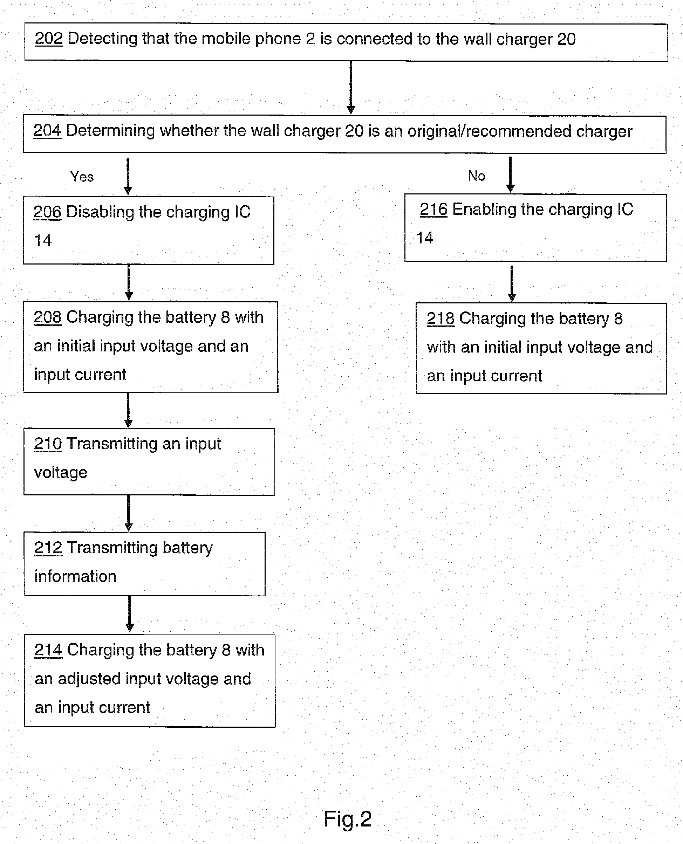

The mobile phone 2 comprises a memory 4 and a processor 6. The memory 4 stores a computer program which when executed by the processor 6 allows the processor 6 to perform the method of Figure 2 (discussed in further details below).

The mobile phone 2 comprises a battery 8, for example a Lithium-Ion battery.

The mobile phone 2 comprises a temperature sensor 10 designed to measure the temperature of the battery 8.

The mobile phone 2 comprises an input voltage sensor 11 designed to measure an input voltage of the battery 8.

The mobile phone 2 comprises a charge sensor 12 designed to measure the level of charge (i.e. percentage of charge) of the battery 8.

The mobile phone 2 comprises a charging Integrated Circuit (IC) 14 designed to regulate the input voltage and input current of the battery 8. In the literature, a charging IC is also known as "charging management IC" or "power management IC".

The mobile phone 2 comprises a socket 16 designed to receive a corresponding plug of a Universal Serial Bus (USB) cable 18.

The USB cable 18 comprises a sheath within which data lines D+ and D- for conveying a data signal and power lines VCC and GND for conveying a power signal extend. The USB cable 18 connects the mobile phone 2 to a wall charger 20.

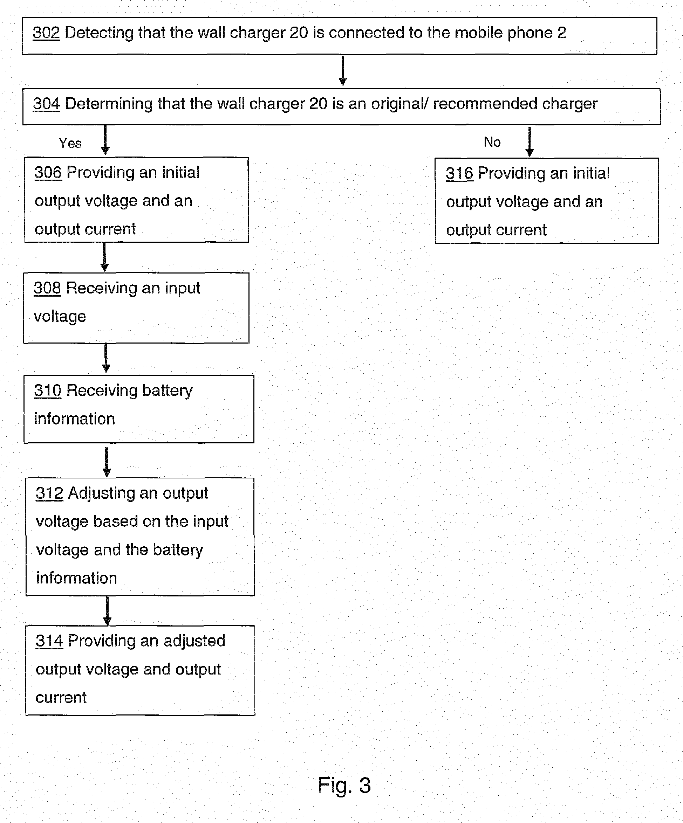

The wall charger 20 comprises a memory 22 and a processor 24. The memory 22 stores computer program which when executed by the processor 24 allows the processor to perform the method of Figure 3 (discussed in further details below).

The wall charger 20 comprises a socket 26 designed to receive a corresponding plug of the USB cable 18.

The wall charger 20 comprises a plug 28 designed to be received in a wall socket (not shown) connected to an electrical network (not shown).

Figure 2 illustrates a flow diagram of an example of a method of operating the mobile phone 2 shown in Figure 1.

In step 202, the processor 6 detects that the mobile phone 2 is connected to the wall charger 20 via the USB cable 18.

In step 204, the processor 6 determines whether the wall charger 20 is an original charger provided by the manufacturer of the mobile phone 2 or a wall charger recommended by the manufacturer of the mobile phone 2. When the wall charger 20 is an original charger or a recommended charger an output of the wall charger 20 on the VCC and GND lines meets charging requirements of the mobile phone 2.

More specifically, the charging requirements comprise that the output voltage of the wall charger 20 on the power lines VCC and GND is lower than or equal to a predetermined maximum voltage specified by the manufacturer of the mobile phone 2. The charging requirements further comprise that the output current on the power lines VCC and GND of the wall charger 20 is lower than or equal to a predetermined maximum current specified by the manufacturer of the mobile phone 2.

In one implementation, the processor 6 transmits a message to the wall charger 20 on the data lines D+ and D- and waits for a response on the data lines D+ and D-. For example, the message identifies the mobile phone 2 and requests the wall charger 20 to determine if it is an original charger or a recommended charger. Alternatively, the message request the wall charger 20 to identify itself so that the mobile phone 2 can determine if it is an original charger or a recommended charger. If the processor 6 receives a predetermined response from the wall charger 20, the processor 6 concludes that the wall charger 20 is an original charger or recommended charger and the method goes to step 206. If the processor 6 does not receive a predetermined response or does not receive any response at all from the wall charger 20, the processor 6 concludes that the wall charger 20 is not an original charger or recommended charger and the method goes to step 216.

In step 206, the processor 6 disables the charging IC 14. As a result, the input voltage and input current of the battery 8 are no longer regulated by the charging IC 14 of the mobile phone 2.

In step 208, the charging of the battery 8 is initiated. For example, if the mobile phone 2 and the wall charger are compatible with the Quick Charge™ technology, the battery 8 is charged using the Quick Charge™ technology. If at least one of the mobile phone 2 and the wall charger is not compatible with the Quick Charge™ technology, the battery 8 is charged using the traditional USB technology.

Accordingly, the wall charger 20 provides an output voltage and an output current on the power lines VCC and GND and the battery 8 is provided with an input voltage and an input current on the power lines VCC and GND. The output voltage of the wall charger 20 is different from the input voltage of the battery 8 due to the voltage drop across the power lines VCC and GND of the USB cable 18. The voltage drop is due to the resistance of the power lines VCC and GND of the USB cable 18 which depends on the resistivity of the material of the power lines VCC and GND and the length of the power lines VCC and GND. The output current of the wall charger 20 is identical to the input current of the battery 8.

In step 210, the processor 6 receives a measure of the input voltage of the battery 8 from the input voltage sensor 11. The processor 6 transmits the measured input voltage to the wall charger 20 on data lines D+ and D- so that the wall charger 20 can determine the voltage drop across the power lines VCC and GND and can adjust the output voltage on the power lines VCC and GND. For example, the wall charger 20 can increase the output voltage once by the determined voltage drop across the power lines VCC and GND of the USB cable 18. In this way, the input voltage of the battery 8 is increased and the battery 8 is charged quicker.

In step 212, the processor 6 receives a measure of the temperature of the battery 8 from the temperature sensor 10 and a measure of the charge of the battery 8 from the charge sensor 12. The processor 6 transmits the measured temperature and the measured charge to the wall charger 20 on data lines D+ and D- so that the wall charger 20 can further adjust the output voltage and the output current on the power lines VCC and GND. For example, the wall charger 20 determines a plurality of charging stages to further increase the charging speed of the battery 8 whilst protecting the battery 8 against overheating risks.

For example, the charging stages include a trickle charge stage (i.e. the output current is set to a self-discharge current of the battery 8 over a predetermined time window), a constant current stage (i.e. the output current is set constant over a predetermined time window) and a constant voltage stage (i.e. the voltage is set constant over a predetermined time window).

In step 214, the battery 8 is charged with an adjusted input voltage and an adjusted input current. The wall charger 20 provides an adjusted output voltage and an adjusted output current on the power lines VCC and GND. In response, the battery 8 is provided with an adjusted input voltage and an adjusted input current on the power lines VCC and GND.

On the other hand, if the wall charger 20 is not an original charger or a recommended charger, then in step 216, the processor 6 enables the charging IC 14 so that the input voltage and input current of the battery 8 are regulated by the charging IC 14 of the mobile phone 2.

In step 218, the charging of the battery 8 is initiated. For example, if the mobile phone 2 and the wall charger are compatible with the Quick Charge™ technology, the battery 8 is charged using the Quick Charge™ technology. If at least one of the mobile phone 2 and the wall charger is not compatible with the Quick Charge™ technology, the battery 8 is charged using the traditional USB technology.

An advantage of the method of Figure 2 is that when the output voltage and the output current of the wall charger do not exceed the maximum output voltage and the maximum output current specified by the manufacturer (i.e. when the wall charger is an original charger or recommended charger) and there is no need to regulate the input voltage and the input current of the battery 8, the charging IC 14 is disabled. In this way, no heat is dissipated by the charging IC 14 and the functioning of the mobile phone in long term is preserved.

Figure 3 illustrates a flow diagram of an example of a method of operating the wall charger 20 shown in Figure 1 according to an aspect of the present disclosure.

In step 302, the processor 24 detects that the wall charger 20 is connected to the mobile phone 2 via the USB cable 18.

In step 304, the processor 24 determines whether the wall charger 20 is an original wall charger provided by the manufacturer of the mobile phone 2 or a wall charger recommended by the manufacturer of the mobile phone 2.

In one implementation, the processor 24 receives a message from the mobile phone 2 on the data lines D+ and D-. If the processor 24 receives a predetermined message from the mobile phone 2, the processor 24 concludes that the wall charger 20 is an original charger or recommended charger for that mobile phone 2. The processor 24 transmits a response to the mobile phone 2 on data lines D+ and D- and the method goes to step 306. If the processor 24 does not receive the predetermined message or does not receive any message at all from the mobile phone 2 on the data lines D+ and D-, the processor 24 concludes that wall charger 20 is not an original charger or recommended wall charger for that mobile phone 2 and the method goes to step 316.

In step 306, the charging of the battery 8 is initiated. For example, if the mobile phone 2 and the wall charger 20 are compatible with the Quick Charge™ technology, the battery 8 is charged using the Quick Charge™ technology. If at least one of the mobile phone 2 and the wall charger is not compatible with the Quick Charge™ technology, the battery 8 is charged using the traditional USB technology.

The wall charger 20 provides an initial output voltage and output current on the power lines VCC and GND.

In step 308, the processor 24 receives a measured input voltage of the battery 8 from the mobile phone 2 on data lines D+ and D-.

In step 310, the processor 24 receives a measured temperature and a measured charge of the battery 8 from the mobile phone 2 on data lines D+ and D-

In step 312, the processor 24 adjusts the output voltage on power lines VCC and GND based on the received input voltage, temperature and charge of the battery 8 from the mobile phone 2.

For example, the processor 24 determines a voltage drop across the power lines VCC and GND by subtracting the input voltage of the battery 8 from the initial output voltage on the power lines VCC and GND. The processor 24 can then increase the output voltage once by the determined voltage drop across the power lines VCC and GND to increase the charging speed of the battery 8 with minimum risk of damaging the battery 8.

Further, the processor 24 determines a plurality of charging stages to further increase the charging speed of the battery 8 whilst protecting the battery 8 against overheating risks. For example, the charging stages include a trickle charge stage (i.e. the output current is set to a self-discharge current of the battery 8 over a predetermined time window), a constant current stage (i.e. the output current is set constant over a predetermined time window) and a constant voltage stage (i.e. the voltage is set constant over a predetermined time window).

In step 314, the wall charger 20 provides an adjusted output voltage and an adjusted output current on the power lines VCC and GND.

On the other hand, if the wall charger 20 is not an original charger or recommended charger, then in step 316, the charging of the battery 8 starts. For example, if the mobile phone 2 and the wall charger are compatible with the Quick Charge™ technology, the battery 8 is charged using the Quick Charge™ technology. If at least one of the mobile phone 2 and the wall charger is not compatible with the Quick Charge™ technology, the battery 8 is charged using the traditional USB technology.

An advantage of the method of Figure 3 is that the wall charger 20 accounts for the voltage drop across the USB cable 18 when adjusting the output voltage and output current on the power lines VCC and GND. It further accounts for the temperature and charge of the battery 8. In this way, the charging speed of the battery 8 can be increased whilst minimizing the risk of damaging the battery 8.

It will be understood that although the method of Figure 2 operates a mobile phone, it may operate any electronic device designed to be charged by a charger (e.g. a tablet computer, a smart watch, a digital camera, etc.).

It will further be understood that that although the method of Figure 3 operates a wall charger, it may operate any charger designed to charge an electronic device (e.g. a portable charger).

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory for storing data. This may be provided by a single component or by plural components. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating an electronic device, the method comprising:
determining whether the electronic device is connected to a charger meeting at least one charging requirement of the electronic device; and
determining whether to enable a charging component of the electronic device based on whether the electronic device is connected to a charger meeting at least one charging requirement of the electronic device.

2. A method according to claim 1, wherein the least one charging requirement of the electronic device includes that an output voltage of the charger is lower than or equal to a predetermined maximum voltage.

3. A method according to claim 1 or claim 2, wherein the least one charging requirement of the electronic device includes that an output current provided by the charger is lower than or equal to a predetermined maximum current.

4. A method according to any of claims 1 to 3, wherein determining whether the electronic device is connected to a charger meeting at least one charging requirement of the electronic device comprises:
transmitting a message to the charger;
determining whether a response is received to the message; and
determining whether the electronic device is connected to a charger meeting at least one charging requirement of the electronic device based on whether a response is received to the message.

5. A method according to any of claims 1 to 4, comprising:
transmitting an input voltage of the electronic device to the charger.

6. A method according to any of claims 1 to 5, comprising:
transmitting battery information of the electronic device to the charger.

7. An electronic device comprising at least one processor and at least one memory including a computer program code, the at least one memory and the computer program code configured to, with the at least one processor, cause the electronic device at least to:
determine whether the electronic device is connected to a charger meeting at least one charging requirement of the electronic device; and
determine whether to enable a charging component of the electronic device based on whether the electronic device is connected to a charger meeting at least one charging requirement of the electronic device.

8. A computer program for an electronic device, comprising software code portions for performing a method according to any of claims 1 to 6 when said program is run on the electronic device.

9. A method of operating a charger, the method comprising:
determining a characteristic of a cable connecting the charger to an electronic device; and
adjusting at least one output of the charger based on the determined characteristic.

10. A method according to claim 9, wherein the characteristic of a cable includes a voltage drop across the cable during charging.

11. A method according to claim 10, wherein determining a characteristic of a cable connecting the charger to an electronic device comprises:
receiving an input voltage of the electronic device from the electronic device; and
determining a voltage drop across the cable based on an output voltage of the charger and the input voltage of the electronic device .

12. A method of claim 11, wherein adjusting at least one output of the charger based on the determined characteristic comprises:
increasing the output voltage of the charger by the determined cable voltage drop.

13. A method according to any of claims 9 to 12, comprising:
receiving battery information of the electronic device from the electronic device; and
adjusting the at least one output of the charger based on the battery information.

14. A charger comprising at least one processor and at least one memory including a computer program code, the at least one memory and the computer program code configured to, with the at least one processor, cause the electronic device at least to:
determine a characteristic of a cable connecting the charger to an electronic device; and
adjust at least one output of the charger based on the determined characteristic.

15. A computer program for charger, comprising software code portions for performing a method according to any of 9 to 13 when said program is run on the charger.
